## Europäisches Patentamt
## European Patent Office
## Office européen des brevets

(19)

(11) Publication number: **0 008 508**
**B1**

# EUROPEAN PATENT SPECIFICATION

(12)

(45) Date of publication of patent specification: **28.10.81**

(51) Int. Cl.³: **G 01 F 23/24**

(21) Application number: **79301575.1**

(22) Date of filing: **03.08.79**

(54) Liquid level sensing apparatus.

(30) Priority: **23.08.78 GB 3426578**

(43) Date of publication of application:
**05.03.80 Bulletin 80/5**

(45) Publication of the grant of the European patent:
**28.10.81 Bulletin 81/43**

(84) Designated Contracting States:
**BE DE FR GB IT NL SE**

(56) References cited:
**DE - A - 2 645 743**
**FR - A - 2 085 952**
**FR - A - 2 256 398**
**FR - A - 2 325 909**
**FR - A - 2 367 276**
**US - A - 3 547 145**
**US - A - 3 943 767**

(73) Proprietor: **LUCAS INDUSTRIES LIMITED**
**Great King Street**
**Birmingham, B19 2XF (GB)**

(72) Inventor: **Williams, David Gordon**
**7 Woodville Road**
**Harborne, Birmingham B17 9AS (GB)**
Inventor: **Harris, Paul Anthony**
**38 Heath Close**
**Stonnal, Walsall West Midlands (GB)**

(74) Representative: **Prutton, Roger et al,**
**MARKS & CLERK Alpha Tower A.T.V.Centre**
**Birmingham B1 1TT (GB)**

Courier Press, Leamington Spa, England.

Liquid level sensing apparatus

This invention relates to a liquid level sensing apparatus of the generally known type in which a probe in the form of a resistive wire having a high temperature co-efficient is immersed in the liquid to be sensed and its behaviour when a heating current is passed through it is monitored by a detector circuit.

To allow for the variation of the resistance of the probe with ambient temperature one known form of apparatus of the kind referred to above (see e.g. French Patent specification No. 2,367,210) makes use of a signal storage means for storing a signal representing the probe resistance at the instant of commencement of current flow through the probe. With such an arrangement, however, the length of time required to measure the effect of passing the heating current through the probe can be substantial and the circuit also has other inconveniences, such as the requirement for a relatively high supply voltage to ensure that signals can be stored corresponding to the initial resistance of the probe over its full range of ambient temperatures.

The problems of storing the initial value and the need for a long measurement period which arise in the above mentioned apparatus could be overcome by differentiating the signal derived from the probe, which has already been suggested *per se*, for a quite different purpose, in U.S. Specification No. 3943767. Such an arrangement would, however, in any system of useful sensitivity be too prone to noise interference and transient phenomena.

In accordance with the present invention this problem is solved by utilizing an integrating circuit following the differentiating circuit.

Preferably the integrating circuit is an active integrating circuit which preferably has a time constant significantly shorter than that of the differentiating circuit.

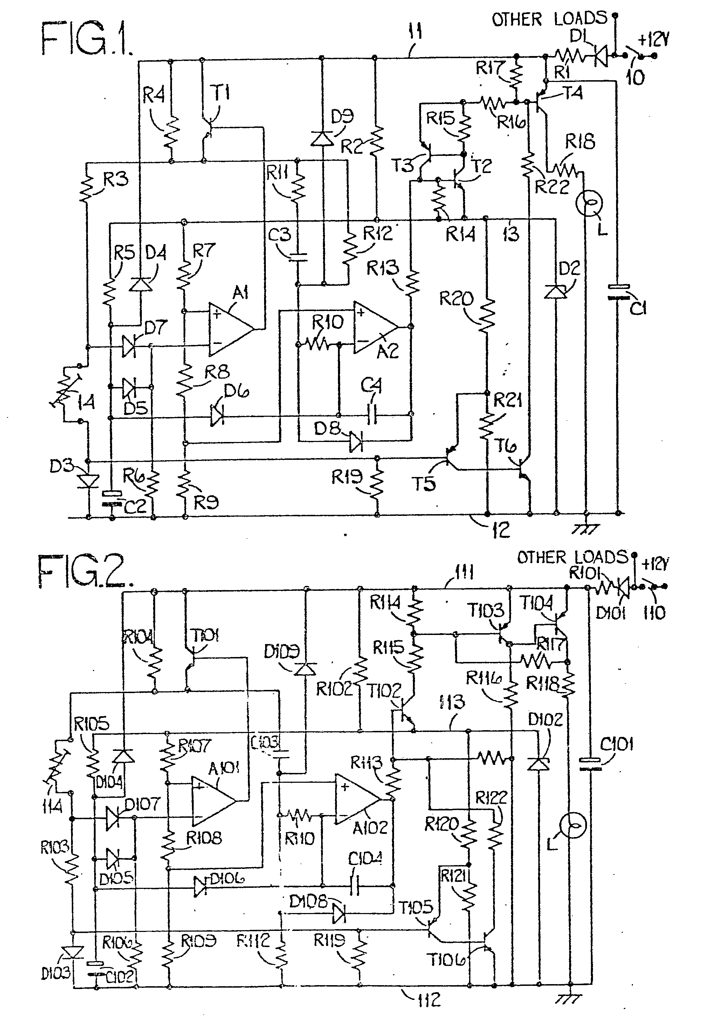

In the accompanying drawings Figures 1 and 2 are circuit diagrams of two embodiments of the invention.

The circuit shown in Figure 1 is intended to sense the level of oil in a vehicle engine oil sump each time the vehicle ignition switch is closed. The ignition switch 10 connects the vehicle battery to the anode of a protective diode $D_1$, the cathode of which is connected via a resistor $R_1$ to a positive supply rail 11. A capacitor $C_1$ is connected between rail 11 and an earth rail 12. There is a further positive supply rail 13 which is connected to rail 11 by a resistor $R_2$ and to the rail 12 by a zener diode $D_2$. Two operational amplifiers $A_1$ and $A_2$ have their supply terminals (not shown) connected to the rails 11, 12.

The amplifier $A_1$ is connected to regulate the voltage applied to a resistive probe 14 for a fixed period following each closure of the switch 10. To this end one end of the probe 14 is connected to the earth rail 12 via a diode $D_3$ and its other end is connected by two resistors $R_3$, $R_4$ in series to the rail 11. An npn transistor $T_1$ has its collector connected to the rail 11, its emitter connected to the junction of resistors $R_3$ and $R_4$ and its base connected to the output terminal of the amplifier $A_1$. A resistor $R_5$ is connected at one end to the rail 13 and at the other end is connected by a capacitor $C_2$ to the rail 12. Said other end of resistor $R_5$ is connected to the anodes of three diodes $D_4$, $D_5$ and $D_6$, the cathode of diode $D_4$ being connected to the rail 11 and the cathodes of diodes $D_5$ and $D_6$ being connected to the inverting input terminals of respective ones of the amplifiers $A_1$, $A_2$. A resistor $R_6$ connects the inverting input terminal of the amplifier $A_1$ to the rail 12. Three resistors $R_7$, $R_8$ and $R_9$ are connected in series between the rails 13 and 12 and the junction of resistors $R_7$ and $R_8$ is connected to the non-inverting input terminal of the amplifier $A_1$. A further diode $D_7$ connects said other end of the probe 14 to the inverting input terminal of amplifier $A_1$.

The diodes $D_5$ and $D_7$ constitute a "high wins" gate such that the higher of the voltages at the anodes of such diodes is delivered to the inverting input of the amplifier $A_1$.

When the switch 10 is opened capacitor $C_2$ can discharge completely via the diode $D_4$ so that at the instant of switch-on the voltage on the anode of diode $D_5$ is zero. Current flowing through resistors $R_7$, $R_8$ and $R_9$ will bias the non-inverting input of amplifier $A_1$ positively, whilst the inverting input thereof will be substantially ground potential, since the resistance of resistor $R_4$ is high compared with the combined resistance of resistor $R_3$, the probe 14 and diode $D_3$. There are roughly similar voltage drops across diodes $D_3$ and $D_7$. As a result, the output of amplifier $A_1$ goes high and switches on the transistor $T_1$, thereby increasing the current in the probe until the voltage at the inverting input terminal of the amplifier $A_1$ is the same as that at the non-inverting input. The current through the probe is thereafter adjusted automatically to maintain this voltage until the capacitor $C_2$ charges up sufficiently to win the gate $D_5$, $D_7$. The output of amplifier $A_1$ then falls, turning off transistor $T_1$ and ending the test sequence for amplifier $A_1$.

During the "constant probe voltage" period, the voltage at the junction of the resistors $R_3$, $R_4$ is linearly dependent on the resistance of the probe 14, so that if the current in probe 14 causes its temperature to rise, the voltage at this junction will fall.

The amplifier $A_2$ is connected to detect changes in the voltage at the junction of resistors $R_3$, $R_4$ and thereby detect any changes in the resistance of the probe 14. To this end, the amplifier $A_2$ has its non-inverting input connected to the junction of resistors $R_8$ and $R_9$ and its inverting input terminal connected by a resistor $R_{10}$ to one side of a capacitor $C_3$, the other side of which is connected by a further resistor $R_{11}$ to the junction of resistors $R_3$ and $R_4$, yet another resistor $R_{12}$ connecting said one side of capacitor $C_3$ to this same junction. The resistors $R_{11}$, $R_{12}$ and the capacitor $C_3$ effectively form a passive differentiating circuit. There are two feed-back paths around the amplifier $A_2$, one of which consists of a capacitor $C_4$ connected between the output terminal of amplifier $A_2$ and the inverting input terminal thereof and the other consisting of a diode $D_8$ with its cathode connected to the output terminal of the amplifier $A_2$ and its anode connected to said one side of the differentiating capacitor $C_3$. A discharge diode $D_9$ connects said one side of capacitor $C_3$ to the rail 11 to enable capacitor $C_3$ to discharge when switch 10 is open.

The initial positive-going voltage transient which occurs at switch-on causes the output of amplifier $A_2$ to become negative with respect to the inverting input terminal so that diode $D_8$ conducts until the voltages at the two inputs of amplifier $A_2$ are at the same voltage. The resistor $R_{11}$ limits the positive excursion of the junction of resistor $R_{10}$ with capacitor $C_3$ during this stage and in so doing limits the amplitude of any oscillatory transients which may exist in the output of amplifier $A_2$.

If the probe 14 is immersed in oil the voltage at the junction of resistors $R_3$ and $R_4$ will remain sensibly constant throughout the test period and after the switch-on transient, no further current will flow in resistor $R_{11}$ and capacitor $C_3$. There will be a voltage across resistor $R_{12}$ which is equal to the sum of the voltages across resistor $R_3$ with diode $D_7$ and resistor $R_8$ respectively, so that current will flow through $R_{12}$ and, to maintain the operational amplifier $A_2$ inputs at the same voltage, the output of the amplifier $A_2$ will fall sufficiently to allow this current to pass through the diode $D_8$.

If the probe is in air, on the other hand, it will heat up as a result of the current and its resistance will rise causing the voltage at the junction of resistors $R_3$ and $R_4$ to fall. During the initial transient the diode $D_8$ will provide amplifier feedback, but as the voltage signal starts to fall current will flow through the capacitor $C_3$ and resistor $R_{11}$. The value of resistor $R_{12}$ is such that it cannot conduct sufficient current to maintain the voltage at the inverting input of the amplifier $A_2$ which will tend to go negative relative to the non-inverting input. Thus the output of amplifier $A_2$ will go positive, cutting off the current in diode $D_8$. In this event the resistor $R_{10}$ and capacitor $C_4$ define the transfer function of the amplifier $A_2$ which thus acts as an integrator with a time constant significantly shorter than that of the differentiating circuit so as to minimise the noise sensitivity of the circuit and also to introduce into the output of amplifier $A_2$

an element related to the average rate of change of the voltage signal.

The connection of diode $D_6$ to the inverting input of amplifier $A_2$ ensures that the output of amplifier $A_2$ goes low before the end of the "constant probe voltage" period, since the voltage on capacitor $C_2$ reaches the voltage at the junction of resistors $R_8$, $R_9$ before it reaches that at the junction of resistors $R_7$, $R_8$. Thus, when the probe is immersed, the amplifier $A_2$ is effectively blocked before the falling voltage transient occurs at the end of the "constant voltage" period.

The output of amplifier $A_2$ is used to trigger a latch circuit controlling a warning lamp L. The output terminal of amplifier $A_2$ is connected by a resistor $R_{13}$ to the base of an npn transistor $T_2$, the emitter of which is connected to the rail 13. A resistor $R_{14}$ is connected between the base of the transistor $T_2$ and the rail 13. The collector of the transistor $T_2$ is connected by three resistors $R_{15}$, $R_{16}$ and $R_{17}$ in series to the rail 11, the junction of resistors $R_{15}$ and $R_{16}$ being connected to the emitter of a pnp transistor $T_3$, the base of which is connected to the collector of the transistor $T_2$ and the collector of which is connected to the base of the transistor $T_2$. When the output of the amplifier $A_2$ goes high transistor $T_2$ starts turning on and positive feedback through transistor $T_3$ regeneratively switches it fully on. Thus, if at any time during the detection period the output of amplifier $A_2$ goes sufficiently high, the transistors $T_2$ and $T_3$ turn on and stay on until the ignition switch is opened again.

The lamp L is controlled by a further pnp transistor $T_4$ which has its emitter connected to the rail 11, its base connected to the junction of the resistors $R_{16}$ and $R_{17}$ and its collector connected by a resistor $R_{18}$ and the lamp L to the rail 12.

The circuit shown also includes a probe fault detecting circuit of which the diode $D_3$ forms a part. A resistor $R_{19}$ is connected across the diode $D_3$ and the anode of diode $D_3$ is connected to the base of a pnp transistor $T_5$, the emitter of which is connected to the junction of two resistors $R_{20}$ and $R_{21}$ which are connected in series between the rails 12, 13. The collector of the transistor $T_5$ is connected to the base of an npn transistor $T_6$ the emitter of which is connected to the rail 12 and the collector of which is connected by a resistor $R_{22}$ to the base of the transistor $T_4$.

Whenever there is current flowing through diode $D_3$ the transistor $T_5$ is turned off, its emitter being biased by resistors $R_{20}$, $R_{21}$ to a voltage less than one diode voltage drop above earth. Should there be no current flow through diode $D_3$ either as a result of the probe being open circuit or short-circuited to earth, current can flow through the emitter-base of transistor $T_5$ and the resistor $R_{19}$, thereby turning on transistors $T_5$, $T_6$ and hence $T_4$ to light the lamp L. The lamp remains lit even after the "constant voltage" period has ended because there will still be no current through diode $D_3$.

Turning now to Figure 2, the ignition switch 110 connects the battery by a diode $D_{101}$ in series with a resistor $R_{101}$ to a rail 111. The zener stabilised rail 113 is connected to rail 111 as in Figure 1 and a zener diode $D_{102}$ connects rail 113 to the earth rail 112. The probe 114 has one end connected by a resistor $R_{103}$ to the diode $D_{103}$ (corresponding to diode $D_3$ in Figure 1) and its other side connected directly to resistor $R_{104}$ (corresponding to resistor $R_4$). The input to the inverting input terminal is taken from said one end of probe 114 via the diode $D_{107}$ and the other parts surrounding amplifier $A_{101}$ correspond exactly to those in Figure 1 with reference numerals increased by 100. The probe current is now controlled by amplifier $A_{101}$ to maintain the voltage across resistor $R_{103}$ constant i.e., the probe current is constant. The voltage at said other end of the probe 114 thus rises with rising temperature (instead of falling as in Figure 1).

The circuit surrounding amplifier $A_{102}$ is correspondingly altered to enable it to detect an opposite voltage excursion, the principle difference being that capacitor $C_{103}$ is connected between the probe 114 and a resistor $R_{112}$ which is connected to the rail 112.

In operation the initial voltage transient at switch-on is a positive going one causing the output of amplifier $A_{102}$ to go negative as before, feedback being provided by the diode $D_{108}$. If the probe is immersed in oil, the voltage at the input of the differentiating circuit $C_{103}$, $R_{112}$ will remain constant and current flowing through resistor $R_{112}$ will cause the output of amplifier $A_{102}$ to swing positively at a rate determined by resistor $R_{110}$ and capacitor $C_{104}$. If the probe is in air the voltage signal will continue to rise after the transient thereby causing the output of amplifier $A_{102}$ to remain low with diode $D_{108}$ conducting.

As a result of this inversion of the mode of operation of amplifier $A_{102}$ the lamp drive circuit is modified somewhat as follows. A resistor $R_{113}$ connects the output of amplifier $A_{102}$ to the base of an npn transistor $T_{102}$ the emitter of which is connected to the rail 113 and the collector of which is connected to the rail 111 by two resistors $R_{114}$, $R_{115}$ in series. The junction of resistors $R_{114}$, $R_{115}$ is connected to the base of a pnp transistor $T_{103}$ which has its emitter connected to the rail 111 and its collector connected by a resistor $R_{116}$ to the rail 112. The collector of the transistor $T_{103}$ is connected to the base of a pnp transistor $T_{104}$ which has its emitter connected to the rail 111 and its collector connected by a resistor $R_{118}$ and the lamp L in series to the rail 112. A resistor $R_{117}$ is connected between the collector of transistor $T_{104}$ and the base of the transistor $T_{103}$.

When the output of amplifier $A_{102}$ rises as a result of the probe being immersed, it will turn on the transistor $T_{102}$ which turns on transistor $T_{103}$.

Transistor $T_{103}$ diverts current in resistor $R_{116}$ away from the base of transistor $T_{104}$ which starts turning off. As a result current flows through resistor $R_{117}$ turns transistor $T_{103}$ on harder, thereby providing the required latch action.

When the probe is in air, transistor $T_{102}$ fails to turn on so that the warning lamp is illuminated.

The transistor $R_{122}$, which corresponds to resistor $R_{22}$ in Figure 1 connects the collector of transistor $T_{105}$ to the base of the transistor $T_{102}$, so that the absence of current in diode $D_{103}$ causes the lamp to turn on as before.

## Claims

1. A liquid level sensing apparatus comprising a resistive probe (14, 114) having a high positive temperature coefficient of resistivity, a circuit ($A_1$, $T_1$ or $A_{101}$, $T_{101}$) for applying either a constant current or a constant voltage to said probe for a limited test period, and means sensitive to a voltage signal developed as a result of current flow in the probe, said voltage sensitive means including a passive differentiating circuit ($R_{11}$, $R_{12}$, $C_3$ or $C_{103}$, $R_{112}$) so that the voltage sensitive means detects the rate of change of said voltage signal characterised in that said voltage signal sensitive means also includes an integrating circuit ($R_{10}$, $A_2$, $C_4$ or $R_{110}$, $A_{102}$, $C_{104}$) which receives as an input the output signal of the passive differentiating circuit.

2. Apparatus as claimed in claim 1 characterised in that the integrating circuit is an active integrating circuit comprising an amplifier ($A_2$ or $A_{102}$) having an inverting input connected to the output of the passive differentiating circuit by a resistor ($R_{10}$ or $R_{110}$) and an output connected by an integrating capacitor ($C_4$ or $C_{104}$) to said inverting input.

3. Apparatus as claimed in claim 2 characterised by a diode ($D_8$ or $D_{108}$) connected between the output of the passive differentiating circuit and the output of said amplifier ($A_2$ or $A_{102}$).

4. Apparatus as claimed in any preceding claim characterised in that the time constant of the integrating circuit is significantly shorter than that of the passive differentiating circuit.

5. Apparatus as claimed in claim 1 characterised in that said circuit for applying a constant current or voltage to the probe comprises an operational amplifier ($A_1$ or $A_{101}$) having a reference voltage supplied to one of its input terminals, means ($D_7$ or $D_{107}$) for applying to the other input terminal of the operational amplifier a voltage signal related to the current through or voltage across said probe, and means connected to the output of said operational amplifier and including a control element ($T_1$ or $T_{101}$) in series with the probe (14 or 114) acting to control the current in the probe so that said voltage signal is made equal to the reference voltage.

6. Apparatus as claimed in claim 5 characterised in that said control element is a transistor ($T_1$ or $T_{101}$) having its collector-emitter path in series with the probe and its base connected to the output of the operational amplifier ($A_1$ or $A_{101}$).

7. Apparatus as claimed in claim 6 characterised in that the collector-emitter path of said transistor ($T_1$), a resistor ($R_3$) and the probe (14) in that order are connected in series across a supply, the junction of the resistor ($R_3$) and the probe (14) being connected to said other input of the operational amplifier ($A_1$) so that the voltage signal applied to the latter is related to the voltage across the probe.

8. Apparatus as claimed in claim 7 characterised in that the differentiating circuit comprises a resistor ($R_{12}$) in parallel with the series combination of a resistor ($R_{11}$) and a capacitor ($C_3$) such circuit being connected at one end to the junction of the resistor ($R_3$) which is in series with the probe (14) and the collector-emitter path of the transistor ($T_1$), and at the other end to an input resistor ($R_{10}$) of a further operational amplifier ($A_2$) having a feedback capacitor ($C_4$) and acting as the active integrating circuit.

9. Apparatus as claimed in claim 8 characterised in that the output of said further operational amplifier ($A_2$) is connected to the input of a latching switch circuit controlling a warning device (L).

10. Apparatus as claimed in claim 9 characterised in that the switch circuit comprises an input transistor ($T_2$) biased to a non-conductive state, but having its base connected to the output of said further operational amplifier ($A_2$) so as to be rendered conductive in the event that the output of said further operational amplifier ($A_2$) exceeds a predetermined level, a feedback transistor ($T_3$) connected to the input transistor ($T_2$) so as to be turned on when the input transistor ($T_2$) is turned on, and to provide current to the base of the input transistor ($T_2$) to latch it in its "on" condition, and an output transistor ($T_4$) drivingly connected to said warning means (L) and having its base connected to the input transistor ($T_2$) so as to drive said warning means (L) whenever the input transistor ($T_2$) is on.

11. Apparatus as claimed in claim 6 characterised in that the collector-emitter path of said transistor ($T_{101}$) the probe (114) and a resistor ($R_{103}$) in that the order are connected in series across a supply, the junction of said resistor ($R_{103}$) and the probe (114) being connected to said other input of the operational amplifier ($A_{101}$) so that the voltage signal applied to the latter is related to the current through the probe (114).

12. Apparatus as claimed in claim 11 characterised in that the differentiating circuit comprises a differentiating capacitor ($C_{103}$) and a differentiator resistor ($R_{112}$) in series with each other, the differentiating capacitor ($C_{103}$) being connected to the junction of the probe (114) and the collector-emitter path of the transistor ($T_{101}$) and the differentiator resistor ($R_{112}$) being connected to one terminal of the supply, there being also provided a further operational amplifier ($A_{102}$) having its inverting input connected to the junction of said differentiating capacitor ($C_{103}$) and said differentiator resistor ($R_{112}$) by an input resistor ($R_{110}$) and an integrating capacitor ($C_{104}$) connected between the inverting input of said further operational amplifier ($A_{102}$) and the output thereof.

13. Apparatus as claimed in claim 12 characterised in that the output of said further operational amplifier ($A_{102}$) is connected to the input of a latching switch circuit controlling a warning device (L).

14. Apparatus as claimed in claim 13 characterised in that said latching switch circuit comprises an input transistor ($T_{102}$) biased to a non-conductive state and connected to the output of said further operational amplifier ($A_{102}$) so as to be turned on when the output voltage of said further operational amplifier ($A_{102}$) rises as a result of the probe (114) being immersed, a second transistor ($T_{103}$) biased off but connected to the input transistor ($T_{102}$) so as to be turned on when the input transistor ($T_{102}$) turns on, an output transistor ($T_{104}$) biased on and feeding said warning means (L) but connected to the second transistor ($T_{103}$) to be turned off when the second transistor ($T_{103}$) is turned on, and a feedback connection ($R_{117}$) from the output transistor ($T_{104}$) to the base of the second transistor ($T_{103}$) to maintain said second transistor ($T_{103}$) in a conductive state when the output transistor ($T_{104}$) turns off.

15. Apparatus as claimed in claim 5 characterised by timing means for determining the length of said test period.

16. Apparatus as claimed in claim 15 characterised in that said timing means comprises a timing capacitor ($C_2$ or $C_{102}$) and a timing resistor ($R_5$ or $R_{105}$) in series across a regulated supply and diode gate means ($D_{105}$) connecting the junction of the timing capacitor ($C_2$ or $C_{102}$) and the timing resistor ($R_5$ or $R_{105}$) to said other input terminal of said operational amplifier ($A_1$ or $A_{101}$), whereby the output of the operational amplifier ($A_1$ or $A_{101}$) is driven to a condition in which said control element ($T_1$ or $T_{101}$) is rendered non-conductive when the voltage across said timing capacitor ($C_2$ or $C_{102}$) reaches a predetermined level.

17. Apparatus as claimed in claim 16 characterised by further comprising a further diode gate means ($D_6$ or $D_{106}$) connecting the junction of the timing capacitor ($C_2$ or $C_{102}$) and the timing resistor ($R_5$ or $R_{105}$) to the input of said active integrating circuit so as to render the latter inoperative when the voltage on the timing capacitor ($C_2$ or $C_{102}$) exceeds a preset level.

18. Apparatus as claimed in claim 17 characterised by means for applying different reference voltage signals to the operational amplifier ($A_1$ or $A_{101}$) and the active integrating

circuit ($A_2$ or $A_{102}$) so that the latter is rendered inoperative by the timing means before the control element ($T_1$ or $T_{101}$) is rendered non-conductive.

## Patentansprüche

1. Detektionsschaltung für Flüssigkeitsstand mit einer Widerstandssonde (14, 114) mit einem hohen positiven Widerstands-Temperaturkoeffizienten, einer Schaltung ($A_1$, $T_1$ oder $A_{101}$, $T_{101}$) zum Anlegen entweder eines konstanten Stromes oder einer konstanten Spannung an die Sonde für eine begrenzte Versuchszeitdauer und einer Spannungsfühlereinrichtung, die auf ein Spannungssignal anspricht, das infolge eines Stromflusses in der Sonde auftritt, wobei die Spannungsfühlereinrichtung Sonde auftritt, wobei die Spannungsfühlereinrichtung eine passive Differenzierschaltung ($R_{11}$, $R_{12}$ $C_3$ oder $C_{103}$, $R_{112}$) aufweist, so daß die Spannungsfühlereinrichtung die Änderungsrate des Spannungssignales erfaßt, dadurch gekennzeichnet, daß die Spannungsfühlereinrichtung weiterhin eine Integrierschaltung ($R_{10}$, $A_2$ $C_4$ oder $R_{110}$, $A_{102}$, $C_{104}$) aufweist, die als ein Eingangssignal das Ausgangssignal der passiven Differenzierschaltung empfängt.

2. Detektionsschaltung nach Anspruch 1, dadurch gekennzeichnet, daß die Integrierschaltung eine aktive Integrierschaltung mit einem Verstärker ($A_2$ oder $A_{102}$) ist, der aufweist einen invertierenden Eingang, der mit dem Ausgang der passiven Differenzierschaltung über einen Widerstand ($R_{10}$ oder $R_{110}$) verbunden ist, und einen Ausgang, der durch einen Integrierkondensator ($C_4$ oder $C_{104}$) an den invertierenden Eingang angeschlossen ist.

3. Detektionsschaltung nach Anspruch 2, gekennzeichnet durch eine Diode ($D_8$ oder $D_{108}$), die zwischen dem Ausgang der passiven Differenzierschaltung und dem Ausgang des Verstärkers ($A_2$ oder $A_{102}$) angeschlossen ist.

4. Detektionsschaltung nach einem der vorangehenden Ansprüche, dadurch gekennzeichnet, daß die Zeitkonstante der Integrierschaltung merklich kürzer als diejenige der passiven Differenzierschaltung ist.

5. Detektionsschaltung nach Anspruch 1, dadurch gekennzeichnet, daß die Schaltung zum Anlegen eines konstanten Stromes oder einer konstanten Spannung an die Sonde aufweist einen Operationsverstärker ($A_1$ oder $A_{101}$) mit einer Bezugsspannung, die zu einem seiner Eingangsanschlüsse gespeist ist, eine Einrichtung ($D_7$ oder $D_{107}$), um an den anderen Eingangsanschluß des Operationsverstärkers ein Spannungssignal zu legen, das auf den Strom bei oder die Spannung an der Sonde bezogen ist, und eine Einrichtung, die mit dem Ausgang des Operationsverstärkers verbunden ist und ein Steuerelement ($T_1$ oder $T_{101}$) in Reihe mit der Sonde (14 oder 114) aufweist, das zur Steuerung des Stromes in der Sonde dient, so daß das Spannungssignal gleich gemacht wird der Bezugsspannung.

6. Detektionsschaltung nach Anspruch 5, dadurch gekennzeichnet, daß das Steuerelement ein Transistor ($T_1$ oder $T_{101}$) ist, dessen Kollektor-Emitter-Strecke in Reihe mit der Sonde liegt und dessen Basis an den Ausgang des Operationsverstärkers ($A_1$ oder $A_{101}$) angeschlossen ist.

7. Detektionsschaltung nach Anspruch 6, dadurch gekennzeichnet, daß die Kollektor-Emitter-Strecke des Transistors ($T_1$), ein Widerstand ($R_3$) und die Sonde (14) in dieser Reihenfolge an einer Strom- bzw. Spannungsversorgung liegen, wobei de Verbindungspunkt des Widerstandes ($R_3$) und der Sonde (14) an den anderen Eingang des Operationsverstärkers ($A_1$) angeschlossen ist, so daß das an letzterem liegende Spannungssignal auf die Spannung an der Sonde bezogen ist.

8. Detektionsschaltung nach Anspruch 7, dadurch gekennzeichnet, daß die Differenzierschaltung einen Widerstand ($R_{12}$) parallel zur Reihenverbindung eines Widerstandes ($R_{11}$) und eines Kondensators ($C_3$) aufweist, wobei diese Schaltung an einem Ende mit dem Verbindungspunkt des Widerstandes ($R_3$), der in Reihe mit der Sonde (14) liegt, und der Kollektor-Emitter-Strecke des Transistors ($T_1$), und am anderen Ende mit einem Eingangswiderstand ($R_{10}$) eines weiteren Operationsverstärkers ($A_2$) verbunden ist, der einen Rückkopplungskondensator ($C_4$) aufweist und als die aktive Integrierschaltung wirkt.

9. Detektionsschaltung nach Anspruch 8, dadurch gekennzeichnet, daß der Ausgang des weiteren Operationsverstärkers ($A_2$) mit dem Eingang einer Verriegelungsschalter-Schaltung verbunden ist, die eine Warneinrichtung (L) steuert.

10. Detektionsschaltung nach Anspruch 9, dadurch gekennzeichnet, daß die Verriegelungsschalter-Schaltung aufweist einen Eingangstransistor ($T_2$), der in einen nichtleitenden Zustand vorgespannt ist und dessen Basis mit dem Ausgang des weiteren Operationsverstärkers ($A_2$) verbunden ist, um dann leitend gemacht zu werden, wenn das Ausgangssignal des weiteren Operationsverstärkers ($A_2$) einen vorbestimmten Pegel überschreitet, einen Rückkopplungstransistor ($T_3$), der mit dem Eingangstransistor ($T_2$) verbunden ist, um eingeschaltet zu werden, wenn der Eingangstransistor ($T_2$) eingeschaltet wird, und um einen Strom zur Basis des Eingangstransistors ($T_2$) zu speisen, wodurch dieser in seinem "Ein"-Zustand verriegelt wird, und einen Ausgangstransistor ($T_4$), der ansteuerungsmäßig mit der Warneinrichtung (L) verbunden ist und dessen Basis an den Eingangstransistor ($T_2$) angeschlossen ist, um die Warneinrichtung (L) anzusteuern, wannimmer der Eingangstransistor ($T_2$) eingeschaltet ist.

11. Detektionsschaltung nach Anspruch 6, dadurch gekennzeichnet, daß die Kollektor-Emitter-Strecke des Transistors ($T_{101}$), die Sonde (114) und ein Widerstand ($R_{103}$) in dieser Reihenfolge in Reihe an einer Strom- bzw. Spannungsversorgung liegen, wobei der Verbindungspunkt des Widerstandes ($R_{103}$) und die Sonde (114) mit dem anderen Eingang des Operationsverstärkers ($A_{101}$) verbunden sind, so daß das an letzterem liegende Spannungssignal auf den Strom durch die Probe (114) bezogen ist.

12. Detektionsschaltung nach Anspruch 11, dadurch gekennzeichnet, daß die Differenzierschaltung einen Differenzierkondensator ($C_{103}$) und einen Differenzierwiderstand ($R_{112}$) in Reihe miteinander aufweist, wobei der Differenzierkondensator ($C_{103}$) mit dem Verbindungspunkt der Sonde (112) und der Kollektor-Emitter-Strecke des Transistors ($T_{101}$) verbunden ist und der Differenzierwiderstand ($R_{112}$) an einen Anschluß der Strom- bzw. Spannungsversorgung angeschlossen ist, daß weiterhin vorgesehen sind ein weiterer Operationsverstärker ($A_{102}$), dessen invertierender Eingang an den Verbindungspunkt des Differenzierkondensators ($C_{103}$) und des Differenzierwiderstandes ($R_{112}$) über einen Eingangswiderstand ($R_{110}$) angeschlossen ist, und ein Integrierkondensator ($C_{104}$), der zwischen dem invertierenden Eingang des weiteren Operationsverstärkers ($A_{102}$) und dessen Ausgang liegt.

13. Detektionsschaltung nach Anspruch 12, dadurch gekennzeichnet, daß der Ausgang des weiteren Operationsverstärkers ($A_{102}$) mit dem Eingang einer Verriegelungsschalter-Schaltung verbunden ist, die eine Warneinrichtung (L) steuert.

14. Detektionsschaltung nach Anspruch 13, dadurch gekennzeichnet, daß die Verriegelungsschalter-Schaltung aufweist einen Eingangstransistor ($T_{102}$), der in einen nichtleitenden Zustand vorgespannt und mit dem Ausgang des weiteren Operationsverstärkers ($A_{102}$) verbunden ist, um eingeschaltet zu werden, wenn die Ausgangsspannung des weiteren Operationsverstärkers ($A_{102}$) als Ergebnis der eingetauchten Sonde (114) ansteigt, einen zweiten Transistor ($T_{103}$), der in einen sperrenden Zustand vorgespannt, jedoch mit dem Eingangstransistor ($T_{102}$) verbunden ist, um eingeschaltet zu werden, wenn der Eingangstransistor ($T_{102}$) einschaltet, einen Ausgangstransistor ($T_{104}$), der in einen leitenden Zustand vorgespannt ist und die Warneinrichtung (L) versorgt, jedoch mit dem zweiten Transistor ($T_{103}$) verbunden ist, um auszuschalten, wenn der zweite Transistor ($T_{103}$) einschaltet, und eine Rückkopplungsverbindung ($R_{117}$) vom Ausgangstransistor ($T_{104}$) zur Basis des zweiten Transistors ($T_{103}$), um den zweiten Transistor ($T_{103}$) in einem leitenden Zustand zu halten, wenn der Ausgangstransistor ($T_{104}$) ausschaltet.

15. Detektionsschaltung nach Anspruch 5, gekennzeichnet durch eine Zeitgebereinrichtung zum Bestimmen der Länge der Versuchszeitdauer.

16. Detektionsschaltung nach Anspruch 15, dadurch gekennzeichnet, daß die Zeitgebereinrichtung aufweist einen Zeitgeberkondensator ($C_2$ oder $C_{102}$) und einen Zeitgeberwiderstand ($R_5$ oder $R_{105}$) in Reihe an einer eingestellten Strom- und Spannungsversorgung und eine Dioden-Gattereinrichtung ($D_{105}$), die den Verbindungspunkt des Zeitgeberkondensators ($C_2$ oder $C_{102}$) und des Zeitgeberwiderstandes ($R_5$ oder ($R_{105}$) mit dem anderen Eingangsanschluß des Operationsverstärkers ($A_1$ oder $A_{101}$) verbindet, wodurch der Ausgang des Operationsverstärkers ($A_1$ oder $A_{101}$) auf einen Zustand angesteuert wird, in dem das Steuerelement ($T_1$ oder $T_{101}$) nichtleitend gemacht wird, wenn die Spannung am Zeitgeberkondensator ($C_2$ oder $C_{102}$) einen vorbestimmten Pegel erreicht.

17. Detektionsschaltung nach Anspruch 16, gekennzeichnet durch eine weitere Dioden-Gattereinrichtung ($D_6$ oder $D_{106}$), die den Verbindungspunkt des Zeitgeberkondensators ($C_2$ oder $C_{102}$) und des Zeitgeberwiderstandes ($R_5$ oder $R_{105}$) mit dem Eingang der aktiven Integrierschaltung verbindet, um letztere unwirksam zu machen, wenn die Spannung am Zeitgeberkondensator ($C_2$ oder $C_{102}$) einen voreingestellten Pegel überschreitet.

18. Detektionsschaltung nach Anspruch 17, gekennzeichnet durch eine Einrichtung zum Anlegen verschiedener Bezugsspannungssignale an den Operationsverstärker ($A_1$ oder $A_{101}$) und die aktive Integrierschaltung ($A_2$ oder $A_{102}$), so daß letztere durch die Zeitgebereinrichtung unwirksam gemacht wird, bevor das Steuerelement ($T_1$ oder $T_{101}$) nichtleitend gemacht wird.

## Revendications

1. Appareil de détection du niveau d'un liquide comprenant une sonde résistante (14, 114) ayant un coefficient de résistivité élevé aux températures positives, un circuit ($A_1$, $T_1$ ou $A_{101}$, $T_{101}$) pour appliquer soit une intensité constante, soit une tension constante à la dite sonde pendant une période d'essai limitée, et des moyens sensibles à un signal de tension produit à la suite du flux de courant dans la sonde, les dits moyens sensibles à la tension comportant un circuit différentiateur passif ($R_{11}$, $R_{12}$, $C_3$ ou $C_{103}$, $R_{112}$) de façon que les moyens sensibles à la tension détectent la vitesse de changement du signal de tension, caractérisé en ce que les moyens sensibles au signal de tension comportent aussi un circuit intégrateur ($R_{10}$, $A_2$, $C_4$ ou $R_{110}$, $A_{102}$, $C_{104}$), qui reçoit à une entrée le signal de sortie du circuit différentiateur passif.

2. Appareil selon la revendication 1, caractérisé en ce que le circuit intégrateur est un circuit intégrateur actif comprenant un amplificateur ($A_2$ ou $A_{102}$) ayant une entrée inverse reliée à la sortie du circuit différentiateur passif par une résistance ($R_{10}$, $R_{110}$) et une sortie reliée par l'intermédiaire d'un condensateur intégrateur ($C_4$ ou $C_{104}$) à la dite entrée inverse.

3. Appareil selon la revendication 2, caractérisé par une diode ($D_8$ ou $D_{108}$) montée entre la sortie du circuit différentiateur passif et celle de l'amplificateur ($A_2$ ou $A_{102}$).

4. Appareil selon l'une quelconque des revendications précédentes, caractérisé en ce que la constante de temps du circuit intégrateur est considérablement plus courte que celle du circuit différentiateur passif.

5. Appareil selon la revendication 1, caractérisé en ce que le circuit destiné à appliquer une intensité constante ou une tension constante à la sonde comprend un amplificateur opérationnel ($A_1$ ou $A_{101}$), dont l'une des bornes d'entrée reçoit une tension de référence, des moyens ($D_7$ ou $D_{107}$) pour appliquer à l'autre borne d'entrée de l'amplificateur opérationnel un signal de tension en rapport avec l'intensité par ou la tension entre les bornes de la sonde, et des moyens reliés à la sortie de l'amplificateur opérationnel et comprenant un élément de commande ($T_1$ ou $T_{101}$) en série avec la sonde (14 ou 114), agissant pour commander le courant dans la sonde de façon que le signal de tension soit rendu égal à la tension de référence.

6. Appareil selon la revendication 5, caractérisé en ce que l'élément de commande est un transistor ($T_1$ ou $T_{101}$) dont le circuit collecteur-émetteur est en série avec la sonde et dont la base est reliée à la sortie de l'amplificateur opérationnel ($A_1$ ou $A_{101}$).

7. Appareil selon la revendication 6, caractérisé en ce que le circuit collecteur-émetteur du dit transistor ($T_1$), une résistance ($R_3$) et la sonde (14) sont, dans l'ordre de leur énumération, montés en série entre les bornes d'une source d'alimentation, la jonction entre la résistance ($R_3$) et la sonde (14) étant reliée à la dite autre entrée de l'amplificateur opérationnel ($A_1$) de façon que le signal de tension appliqué à celui-ci soit en rapport à la tension entre les bornes de la sonde.

8. Appareil selon la revendication 7, caractérisé en ce que le circuit différentiateur comprend une résistance ($R_{12}$) en parallèle avec la combinaison en série d'une résistance ($R_{11}$) et d'un condensateur ($C_3$), ce circuit étant relié à une extrémité à la jonction entre la résistance ($R_3$) qui est en série avec la sonde (14) et le circuit collecteur-émetteur du transistor ($T_1$) et, à l'autre extrémité, à une résistance d'entrée ($R_{10}$) d'un autre amplificateur opérationnel ($A_2$) ayant un condensateur de réaction ($C_4$) et agissant comme circuit intégrateur actif.

9. Appareil selon la revendication 8, caractérisé en ce que la sortie de cet autre amplificateur opérationnel ($A_2$) est reliée à l'entrée d'un circuit de blocage commandant un dispositif avertisseur (L).

10. Appareil selon la revendication 9, caractérisé en ce que le circuit de blocage comprend un transistor d'entrée ($T_2$) polarisé à un état non-passant, mais dont la base est reliée à la sortie du dit autre amplificateur opérationnel ($A_2$) de façon à être rendu passant lorsque le signal de sortie de ce même amplificateur ($A_2$) dépasse un niveau prédéterminé, un transistor de réaction ($T_3$) relié au transistor d'entrée ($T_2$) de façon à être rendu passant lorsque ce dernier est lui-même rendu passant et à fournir du courant à la base du dit transistor d'entrée ($T_2$) pour le verrouiller dans son état passant, et un transistor de sortie ($T_4$) apte à exciter le dispositif avertisseur (L), auquel il est relié, et dont la base est reliée au transistor d'entrée ($T_2$) de façon à exciter les dits moyens avertisseurs (L) chaque fois que ce transistor d'entrée est passant.

11. Appareil selon la revendication 6, caractérisé en ce que le circuit collecteur-émetteur du dit transistor ($T_{101}$), la sonde (114) et une résistance (103) sont montés en série, dans l'ordre de leur énumération, entre les bornes d'une source d'alimentation, la jonction entre la dite résistance (103) et la sonde (114) étant reliée à la dite autre entrée de l'amplificateur opérationnel ($A_{101}$) de façon que le signal de tension envoyé à ce dernier soit en rapport avec l'intensité du courant entre les bornes de la sonde.

12. Appareil selon la revendication 11, caractérisé en ce que le circuit différentiateur comprend un condensateur différentiateur ($C_{103}$) et une résistance différentiatrice ($R_{112}$) montés en série l'un avec l'autre, le condensateur différentiateur ($C_{103}$) étant relié à la jonction entre la sonde (114) et le circuit collecteur-émetteur du transistor ($T_{101}$) et la résistance différentiatrice ($R_{112}$) étant reliée à une borne du dispositif d'alimentation, un autre amplificateur opérationnel ($A_{102}$) étant prévu, dont l'entrée inverse est reliée à la jonction entre le condensateur différentiateur ($C_{103}$) et la résistance différentiatrice ($R_{112}$) par une résistance d'entrée ($R_{110}$) et un condensateur intégrateur ($C_{104}$) monté entre l'entrée inverse de l'autre amplificateur opérationnel ($A_{102}$) et la sortie de ce dernier.

13. Appareil selon la revendication 12, caractérisé en ce que la sortie de cet autre amplificateur opérationnel ($A_{102}$) est reliée à l'entrée d'un circuit de blocage qui commande un dispositif avertisseur (L).

14. Appareil selon la revendication 13, caractérisé en ce que le circuit de blocage comprend un transistor d'entrée ($T_{102}$) polarisé à un état non-passant et relié à la sortie de l'autre amplificateur opérationnel ($A_{102}$) de façon à être rendu passant lorsque la tension de sortie de ce même amplificateur ($A_{102}$) s'élève par suite de l'immersion de la sonde (114), un second transistor ($T_{103}$) polarisé de façon à être non-passant, mais relié au transistor d'entrée ($T_{102}$) de façon à être rendu passant lorsque ce transistor d'entrée ($T_{102}$) devient passant, un transistor de sortie ($T_{104}$) polarisé de façon à être passant et alimentant le dispositif avertisseur (L), mais relié au second transistor ($T_{103}$) de façon à être rendu non-passant lorsque ce second transistor ($T_{103}$) est rendu passant, et une liaison de réaction ($R_{117}$) entre le transistor de sortie ($T_{104}$) et la base du second transistor ($T_{103}$) pour maintenir celui-ci à l'état passant lorsque le transistor de sortie devient non-passant.

15. Appareil selon la revendication 5, caractérisé en ce qu'il comporte des moyens de temporisation pour déterminer la durée de la période d'essai.

16. Appareil selon la revendication 15, caractérisé en ce que les moyens de temporisation comprennent un condensateur temporisateur ($C_2$ ou $C_{102}$) et une résistance temporisatrice ($R_5$ ou $R_{105}$) montés en série entre les bornes d'une alimentation régulée et des moyens à diode formant porte ($D_{105}$) reliant la jonction entre le condensateur temporisateur ($C_2$ ou $C_{102}$) et la résistance temporisatrice ($R_5$ ou $R_{105}$) à l'autre borne d'entrée de l'amplificateur opérationnel ($A_1$ ou $A_{101}$), de sorte que la sortie de cet amplificateur ($A_1$ ou $A_{101}$) est amenée à un état dans lequel le dit élément de commande ($T_1$ ou $T_{101}$) est rendu non-passant lorsque la tensions entre les bornes du condensateur temporisateur ($C_2$ ou $C_{102}$) atteint un niveau prédéterminé.

17. Appareil selon la revendication 16, caractérisé en ce qu'il comporte en outre un autre moyen à diode formant porte ($D_6$ ou $D_{106}$) qui relie la jonction entre le condensateur temporisateur ($C_2$ ou $C_{102}$) et la résistance temporisatrice ($R_5$ ou $R_{105}$) à l'entrée du circuit intégrateur actif de façon à rendre ce dernier inopérant lorsque la tension au condensateur temporisateur ($C_2$ ou $C_{102}$) dépasse un niveau prédéterminé.

18. Appareil selon la revendication 17, caractérisé par des moyens pour appliquer des signaux de tension de référence différents à l'amplificateur opérationnel ($A_1$ ou $A_{101}$) et au circuit intégrateur actif ($A_2$ ou $A_{102}$), de façon que ce dernier soit rendu inopérant par les moyens de temporisation avant que l'élément de commande ($T_1$ ou $T_{101}$) soit rendu non-passant.

FIG.1.

FIG.2.